# DEMANDE DE BREVET EUROPEEN

(11) **EP 1 463 266 A2**
(43) Date de publication de la demande: **29.09.2004**
(21) Numéro de dépôt: 04290797.2
(22) Date de dépôt: 25.03.2004
(51) Int. Cl.: H04L 29/06, H04L 12/22

(54) **Procédé de collecte d'informations relatives à au moins un certificat électronique en vue d'une connexion sécurisée et page de présentation pour la mise en oeuvre de ce procédé**

(30) Priorité: 28.03.2003 FR 0303866
(71) Demandeur: FRANCE TELECOM, 75015 Paris (FR)
(72) Inventeur: Arditti Modiano, David, 92140 clamart (FR); Frish, Laurent, 75013 Paris (FR); Mouton, Dimitri, 75015 Paris (FR)
(74) Mandataire: Remy, Vincent Noel Paul

(57) **Abrégé**

Ce procédé de collecte d'informations relatives à au moins un certificat électronique (S) devant être utilisé pour l'authentification d'un terminal client (10) et/ou d'un terminal serveur (18) en vue de l'établissement d'une connexion sécurisée entre ce terminal client et ce terminal serveur, comprend les étapes suivantes :
- téléchargement et/ou consultation (26, 28) par le terminal client d'une page de présentation (24) comportant un lien vers une autre page de demande d'établissement de connexion sécurisée avec le terminal serveur (18), l'établissement de la connexion sécurisée avec le terminal serveur nécessitant l'utilisation dudit certificat ; et
- déclenchement (26, 28) de la recherche des informations nécessaires à l'utilisation dudit certificat.

La recherche des informations nécessaires est déclenchée, lors de l'étape de téléchargement et/ou consultation de la page de présentation (24), par la détection par un terminal de collecte d'informations (10, 12) d'au moins une marque spécifique (24a) insérée dans la page de présentation (24).

## Description

La présente invention concerne un procédé de collecte d'informations nécessaires pour la validation par un terminal client et/ou un terminal serveur d'au moins un certificat électronique en vue de l'établissement d'une connexion sécurisée entre ce terminal client et ce terminal serveur. L'invention concerne également une page de présentation pour la mise en oeuvre d'un tel procédé.

De façon plus précise, l'invention concerne un procédé comprenant les étapes suivantes :
- connexion du terminal client à une page de présentation comportant un lien vers une autre page de demande d'établissement de connexion sécurisée avec le terminal serveur, la connexion sécurisée avec le terminal serveur nécessitant la validation dudit certificat ; et
- déclenchement de la recherche des informations nécessaires à la validation dudit certificat.

Un tel procédé de collecte d'informations est connu. Il est en général mis en oeuvre par un protocole de communications sécurisées entre un terminal client et un terminal serveur, mettant en place une authentification de l'une des deux parties voire des deux parties par validation d'un certificat.

Pour la mise en oeuvre d'un protocole de communications sécurisées, plusieurs étapes sont coûteuses en temps d'exécution et/ou de calcul et posent problèmes pour la mise en oeuvre d'un tel protocole sur des terminaux légers, tels que par exemple des terminaux mobiles, des assistants numériques personnels, utilisant de façon classique le protocole WAP.

Parmi les étapes coûteuses, plus particulièrement les opérations cryptographiques de vérification peuvent être longues, ainsi que le contrôle de révocation d'un certificat, pour la validation d'un certificat du terminal serveur.

L'invention vise à remédier à ces inconvénients, en fournissant un procédé de collecte d'informations permettant la mise en oeuvre simple et rapide d'un protocole de connexion sécurisée.

L'invention a donc pour objet un procédé de collecte d'informations relatives à au moins un certificat électronique devant être utilisé pour l'authentification d'un terminal client et/ou d'un terminal serveur en vue de l'établissement d'une connexion sécurisée entre ce terminal client et ce terminal serveur, comprenant les étapes suivantes :
- téléchargement et/ou consultation par le terminal client d'une page de présentation comportant un lien vers une autre page de demande d'établissement de connexion sécurisée avec le terminal serveur, l'établissement de la connexion sécurisée avec le terminal serveur nécessitant l'utilisation dudit certificat ; et
- déclenchement de la recherche des informations nécessaires à l'utilisation dudit certificat,
caractérisé en ce que la recherche des informations nécessaires est déclenchée, lors de l'étape de téléchargement et/ou consultation de la page de présentation, par la détection par un terminal de collecte d'informations d'au moins une marque spécifique insérée dans la page de présentation.

Ainsi, la collecte d'informations nécessaires pour la validation d'un certificat électronique est déclenchée dès que l'utilisateur s'est connecté à une page de présentation comportant un lien vers la page nécessitant une connexion sécurisée. Lorsque l'utilisateur se connecte effectivement au site sécurisé, la collecte d'informations coûteuse et longue a déjà eu lieu, de sorte que cette connexion est considérablement accélérée.

Un procédé de collecte d'informations selon l'invention peut en outre comporter l'une ou plusieurs des caractéristiques suivantes :
- la marque spécifique comporte des instructions sur au moins une opération à exécuter pour effectuer la recherche d'informations ;
- l'opération à effectuer comporte la sélection d'un certificat d'authentification du terminal client parmi une multiplicité de certificats du terminal client, ce certificat devant être utilisé pour authentifier le terminal client auprès du terminal serveur ;
- l'opération à effectuer comporte la vérification de la validité d'un certificat prédéterminé du terminal serveur ;
- la vérification de la validité du certificat prédéterminé du terminal serveur comporte la mise en oeuvre d'un procédé de contrôle de révocation de ce certificat ;
- la marque comporte un paramètre indiquant une probabilité qu'une demande d'établissement de la connexion sécurisée ait effectivement lieu ;
- la page de présentation comportant plusieurs marques spécifiques chacune de l'établissement d'une connexion sécurisée entre le terminal client et un terminal serveur, plusieurs recherches d'informations sont déclenchées par la détection par le terminal de collecte d'informations desdites marques spécifiques ;
- on attribue à la marque spécifique une portée sur la page de présentation pour déterminer les conditions de sa détection par le terminal client ;
- la portée de la marque indique une zone prédéterminée de la page de présentation, par exemple la page entière ;
- le terminal de collecte d'informations comporte un serveur de proximité interconnecté entre le terminal serveur et le terminal client, et la recherche des informations nécessaires est réalisée par ce serveur de proximité ;
- le procédé comporte une étape d'établissement de la connexion sécurisée entre le terminal client et le terminal serveur déclenchée lors de l'étape de téléchargement et/ou consultation de la page de présentation, notamment par la détection par le terminal de collecte d'informations de la marque spécifique insérée dans la page de présentation ;
- le format de la page de présentation est choisi parmi l'un des formats standards de l'ensemble constitué du format HTML, du format XHTML, du format XML et du format WML ; et
- le protocole utilisé pour la connexion sécurisée entre le terminal client et le terminal serveur est choisi parmi l'un des protocoles standards de l'ensemble constitué du protocole SSL, du protocole SSH, du protocle TLS et du protocole WTLS.

L'invention a également pour objet une page de présentation comportant un lien vers une autre page de demande d'établissement de connexion sécurisée avec un terminal serveur, la connexion sécurisée avec le terminal serveur nécessitant l'utilisation d'au moins un certificat électronique, caractérisée en ce qu'elle comporte une marque spécifique détectable par un terminal de collecte d'informations pour le déclenchement d'une recherche d'informations nécessaires pour l'utilisation dudit certificat par un terminal client et/ou le terminal serveur.

L'invention sera mieux comprise à la l'aide de la description qui va suivre, donnée uniquement à titre d'exemple et faite en se référant aux dessins annexés, dans lesquels :
- la figure 1 représente schématiquement la structure d'un système de collecte d'informations pour la mise en oeuvre d'un procédé selon l'invention ; et
- la figure 2 représente une succession étapes mises en oeuvre par le procédé selon l'invention.

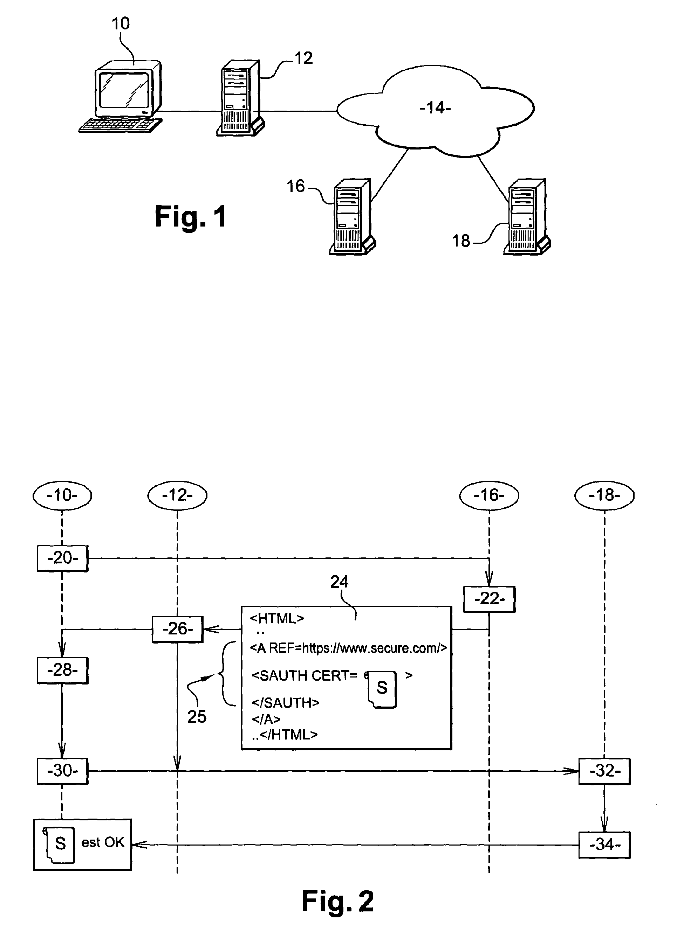

Le système représenté sur la figure 1 comporte un terminal d'accès 10, par exemple un micro-ordinateur connecté à un serveur de proximité 12, permettant son accès à un réseau de transmission d'informations, tel que le réseau Internet 14.

Par cette connexion au réseau Internet 14, un utilisateur du micro-ordinateur 10 peut accéder à différents sites hébergés par des serveurs distants 16 et 18.

Par exemple, un premier serveur 16 met à la disposition des utilisateurs du réseau Internet 14 des pages de présentation accessibles en mode non sécurisé. De même, un second serveur 18 met à la disposition des utilisateurs du réseau Internet 14 des pages de présentation accessibles en mode de connexion sécurisée.

La connexion sécurisée peut utiliser le protocole SSL (pour "Secure Socket Layer"). En variante, le protocole de connexion sécurisé utilisé peut être le protocole SSH (pour "Secure SHell"), le protocole TLS (pour "Transport Layer Security"), ou le protocole WTLS (pour " Wireless Transport Layer Security").

Le fonctionnement de ce système va maintenant être décrit en référence à la figure 2.

Sur cette figure, lors d'une première étape 20, un utilisateur du micro-ordinateur 10 se connecte au serveur 16 de façon non sécurisée.

Lors de l'étape de présentation 22 suivante, le serveur 16 renvoie au micro-ordinateur 10 une page de présentation 24, par exemple une page de type HTML.

Le format de la page de présentation choisi dans la suite de la description est le format HTML (pour "HyperText Markup Langage").

Ce format peut, en variante, être le format standard XHTML (pour "eXtended HyperText Markup Langage"), le format XML (pour "eXtended Markup Langage") ou WML (pour "Wireless Markup Langage").

Cette page HTML 24 comporte un lien vers un site à connexion sécurisée, par exemple hébergé par le serveur 18, dont l'adresse est https://www.secure.com. Ce lien est identifié par un champ 25 de la page HTML 24.

Le champ 25 comporte non seulement l'adresse du site à connexion sécurisée, mais également une marque 24a comportant des instructions sur au moins une opération préalable à exécuter pour effectuer une recherche d'informations nécessaires pour la validation d'au moins un certificat électronique en vue de l'établissement d'une connexion sécurisée avec le serveur sécurisé 18.

La marque 24a a une portée prédéfinie, selon l'endroit où la marque est insérée dans la page HTML 24.

Par exemple, si la marque doit avoir une portée sur toute la page HTML 24, celle-ci est classée dans l'entête du document HTML. Par exemple :

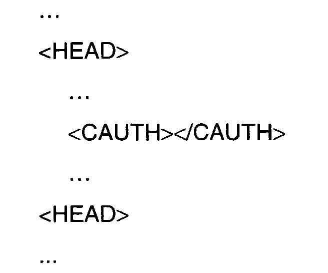

Si l'on souhaite que la marque ait la portée d'une zone prédéfinie de la page HTLM 24, par exemple celle correspondant au champ 25, la marque 24a est insérée dans ce champ 25. Elle prend soit la forme d'une marque placée dans le champ 25, soit la forme d'un attribut spécifique du champ 25. Par exemple :

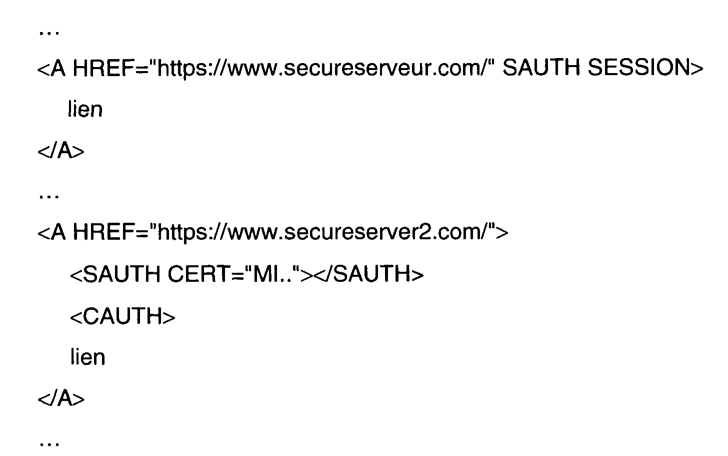

La marque comporte des instructions sur au moins une opération à exécuter pour effectuer la recherche d'informations lors de l'étape de collecte d'informations. Cette opération peut comporter la sélection d'un certificat d'authentification du terminal client parmi une multiplicité de certificats du terminal client, ces certificats devant être par la suite validés par le terminal serveur.

Elle peut aussi comporter la vérification de la validité d'un certificat prédéterminé du terminal serveur.

Dans le premier cas, la marque peut être désignée par une terminologie spécifique, pour la recherche d'un certificat parmi une pluralité de certificat d'authentification du client, cette terminologie étant par exemple "CAUTH".

Dans le second cas, c'est-à-dire pour la vérification d'un certificat prédéterminé du serveur 18, la marque peut être désignée par une terminologie spécifique, par exemple "SAUTH".

La marque peut s'accompagner d'extensions. Par exemple dans le premier cas, la marque CAUTH peut s'accompagner de plusieurs extensions "TRUSTED", qui permettent de désigner les autorités de contrôle qui ont la confiance du serveur à accès sécurisé 18.

Dans le second cas, la marque SAUTH doit s'accompagner de l'une des extensions suivantes :
- "CERT", qui permet de préciser le certificat du serveur qu'il va falloir valider, pour l'établissement de la connexion sécurisée ; et
- "SESSION", qui permet de préciser au client qu'il est possible d'obtenir le certificat du serveur à accès sécurisé 18, en commençant d'ores et déjà à établir une session sécurisée avec celui-ci.

L'extension "CERT" peut elle-même être accompagnée de plusieurs extensions qui permettent chacune de donner les certificats des autorités de contrôle nécessaires à la validation du certificat du serveur 18.

Dans les deux cas, les marques peuvent comporter une extension "PROBABILITE" qui donne une indication sur la probabilité que la demande de connexion sécurisée ait effectivement lieu.

Enfin, une page HTML 24 peut comporter plusieurs marques, comportant chacune des instructions sur une opération différente, et comportant des extensions différentes. Par exemple :

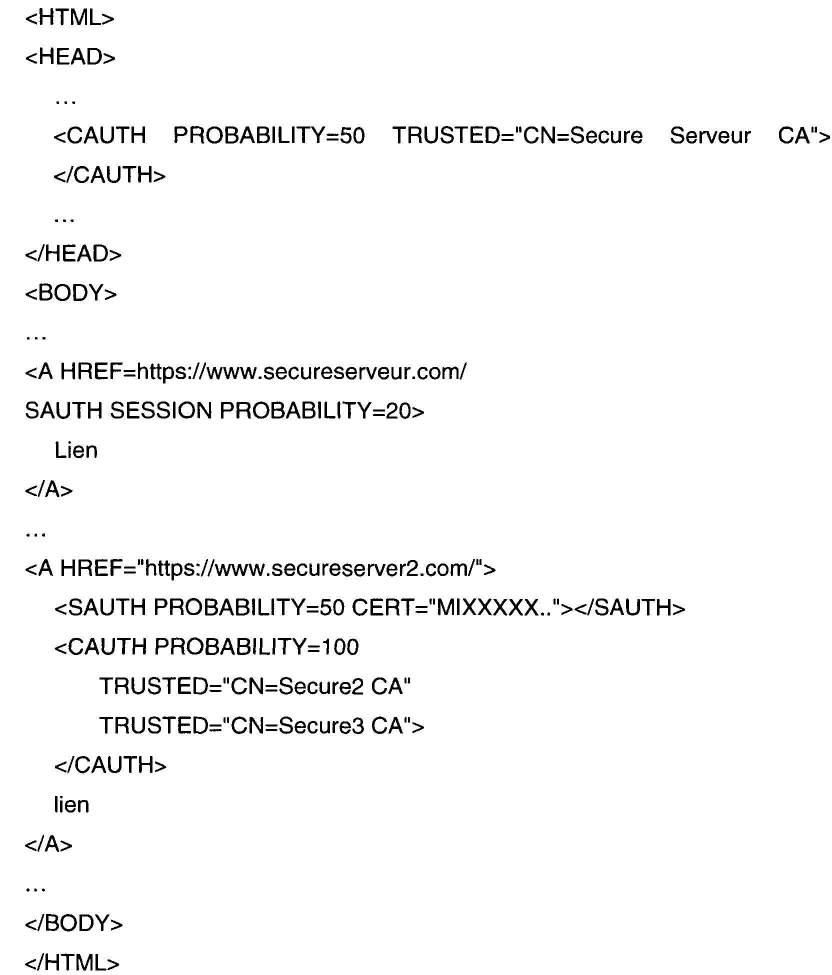

La page HTML 24 est fournie au micro-ordinateur 10, via le serveur de proximité 12 du fournisseur d'accès du client.

Lors d'une étape 26, le serveur de proximité 12 reçoit cette page HTML 24.

Selon une première variante de l'invention, le serveur de proximité 26 se contente de transmettre la page HTML 24 au micro-ordinateur 10, qui la reçoit lors d'une étape 28.

Selon une seconde variante de l'invention, le serveur de proximité peut prendre connaissance du contenu de la page HTML 24 et repérer les marques qu'elle contient.

Il peut éventuellement apporter des modifications aux probabilités associées à chacune des marques, ce serveur de proximité disposant d'informations complémentaires permettant d'anticiper les éventuelles navigations du client dans la page de présentation HTML 24.

Il peut aussi éventuellement réaliser les opérations indiquées par les marques de la page de présentation 24.

Ainsi, en fonction de la portée de la marque, lorsque l'utilisateur navigue sur la page HTML 24, ou lorsqu'il navigue dans la zone correspondant au champ 25, la recherche des informations nécessaires à la validation d'au moins un certificat électronique en vue de l'établissement d'une connexion sécurisée avec le serveur 18 est déclenchée, avant même que l'utilisateur n'ait effectivement demandé la connexion sécurisée avec ce serveur. Elle est effectuée, soit par le terminal client lors de l'étape 28 dans la première variante, soit par le serveur de proximité 12 lors de l'étape 26, selon la seconde variante.

Lors d'une étape 30 de demande de connexion sécurisée, l'utilisateur clique sur un icone correspondant au lien vers une page de demande d'établissement de connexion sécurisée avec le terminal 18. Le temps d'exécution de cette étape est accéléré du fait que la recherche des informations préalables a déjà été effectuée, soit par le terminal client 10, soit par le terminal de proximité 12, lors de l'étape 26 ou 28.

Lors de l'étape 32 suivante, le terminal à accès sécurisé 18 reçoit cette demande de connexion sécurisée et fournit, lors de l'étape 34 suivante, son certificat. Au cours de cette étape 34, il peut également vérifier un certificat de l'utilisateur, si celui-ci est requis et a été envoyé lors de l'étape 30.

Enfin, lors d'une dernière étape, le micro-ordinateur 10 reçoit le certificat du terminal à accès sécurisé 18 et le valide, à l'aide des informations collectées au préalable. La validation du certificat du serveur à accès limité est connue. Il s'agit de la mise en oeuvre d'un procédé de décryptage de clé publique ou clé secrète, selon le type de cryptographie. Le contrôle de révocation ayant déjà eu lieu, la validation du certificat du terminal 18 à accès sécurisé est rapide.

Il apparaît clairement qu'un procédé de collecte d'informations selon l'invention permet d'accélérer considérablement la connexion sécurisée à un serveur distant, à partir d'un terminal, notamment un terminal mobile, ou un assistant numérique personnel, dont les capacités de calcul sont limitées.

On peut envisager l'application d'un tel procédé de collecte d'informations, à des connexions sur des sites bancaires dont l'accès personnalisé à des données confidentielles nécessite l'établissement d'une connexion sécurisée avec le serveur bancaire.

D'une façon plus générale, on peut envisager l'application d'un tel procédé de collecte d'informations, à des connexions sur des sites à accès non sécurisé à partir desquels des utilisateurs peuvent accéder à des sites à accès sécurisé. Ces sites à accès sécurisé peuvent comporter :
- un espace personnel (compte en banque en ligne, compte personnel sur un site marchand, compte de courrier électronique, portail Web personnalisé) ;
- un espace à contenu dont il faut garantir l'intégrité ;
- un espace de travail (portail personnalisé d'entreprise, accès à des applications Web d'entreprise, espace de travail collaboratif).

On peut également envisager l'application d'un tel procédé de collecte d'informations, à des connexions sur des annuaires de sites, certains liens de ces annuaires de sites pointant vers des sites à accès sécurisé.

On peut également envisager l'application d'un tel procédé de collecte d'informations, à des connexions sur des sites gestionnaires de courriers électroniques, ces sites permettant la gestion de courriers électroniques signés. Les marques du type de la marque 24a peuvent être alors insérées dans des pages de présentation de listes de courriers électroniques, par exemple comme paramètres d'applications JAVA, pour indiquer que la lecture d'un courrier électronique donné nécessite la vérification d'une signature à partir d'un certificat d'authentification.

Enfin, on peut envisager l'application d'un tel procédé de collecte d'informations, à toute connexion vers un site à accès sécurisé, à partir d'un système utilisant le protocole de communications WAP.

## Revendications

1. Procédé de collecte d'informations relatives à au moins un certificat électronique (S) devant être utilisé pour l'authentification d'un terminal client (10) et/ou d'un terminal serveur (18) en vue de l'établissement d'une connexion sécurisée entre ce terminal client et ce terminal serveur, comprenant les étapes suivantes :
- téléchargement et/ou consultation (26, 28) par le terminal client d'une page de présentation (24) comportant un lien vers une autre page de demande d'établissement de connexion sécurisée avec le terminal serveur (18), l'établissement de la connexion sécurisée avec le terminal serveur nécessitant l'utilisation dudit certificat ; et
- déclenchement (26, 28) de la recherche des informations nécessaires à l'utilisation dudit certificat,
**caractérisé en ce que** la recherche des informations nécessaires est déclenchée, lors de l'étape de téléchargement et/ou consultation de la page de présentation (24), par la détection par un terminal de collecte d'informations (10, 12) d'au moins une marque spécifique (24a) insérée dans la page de présentation (24).

2. Procédé de collecte d'informations selon la revendication 1, **caractérisé en ce que** la marque spécifique (24a) comporte des instructions sur au moins une opération à exécuter pour effectuer la recherche d'informations.

3. Procédé de collecte d'informations selon la revendication 2, **caractérisé en ce que** l'opération à effectuer comporte la sélection d'un certificat d'authentification du terminal client (10) parmi une multiplicité de certificats du terminal client, ce certificat devant être utilisé pour authentifier le terminal client (10) auprès du terminal serveur (18).

4. Procédé de collecte d'informations selon la revendication 2 ou 3, **caractérisé en ce que** l'opération à effectuer comporte la vérification de la validité d'un certificat prédéterminé du terminal serveur (18).

5. Procédé de collecte d'informations selon la revendication 4, **caractérisé en ce que** la vérification de la validité du certificat prédéterminé du terminal serveur comporte la mise en oeuvre d'un procédé de contrôle de révocation de ce certificat.

6. Procédé de collecte d'informations selon l'une quelconque des revendications 1 à 5, **caractérisé en ce que** la marque (24a) comporte un paramètre indiquant une probabilité qu'une demande (30) d'établissement de la connexion sécurisée ait effectivement lieu.

7. Procédé de collecte d'informations selon l'une quelconque des revendications 1 à 6, **caractérisé en ce que**, la page de présentation (24) comportant plusieurs marques (24a) spécifiques chacune de l'établissement d'une connexion sécurisée entre le terminal client (10) et un terminal serveur (18), plusieurs recherches d'informations sont déclenchées par la détection par le terminal de collecte d'informations (10, 12) desdites marques spécifiques (24a).

8. Procédé de collecte d'informations selon l'une quelconque des revendications 1 à 7, **caractérisé en ce que** l'on attribue à la marque spécifique (24a) une portée sur la page de présentation pour déterminer les conditions de sa détection par le terminal client.

9. Procédé de collecte d'informations selon la revendication 8, **caractérisé en ce que** la portée de la marque (24a) indique une zone prédéterminée de la page de présentation (24), par exemple la page entière.

10. Procédé de collecte d'informations selon l'une quelconque des revendications 1 à 9, **caractérisé en ce que** le terminal de collecte d'informations (10, 12) comporte un serveur de proximité (12) interconnecté entre le terminal serveur (18) et le terminal client (10), et **en ce que** la recherche des informations nécessaires est réalisée par ce serveur de proximité (12).

11. Procédé de collecte d'informations selon l'une quelconque des revendications 1 à 10, **caractérisé en ce qu'**il comporte une étape (32) d'établissement de la connexion sécurisée entre le terminal client (10) et le terminal serveur (18) déclenchée lors de l'étape de téléchargement et/ou consultation de la page de présentation, notamment par la détection par le terminal de collecte d'informations (10, 12) de la marque spécifique (24a) insérée dans la page de présentation (24).

12. Procédé de collecte d'informations selon l'une quelconque des revendications 1 à 11, **caractérisé en ce que** le format de la page de présentation (24) est choisi parmi l'un des formats standards de l'ensemble constitué du format HTML, du format XHTML, du format XML et du format WML.

13. Procédé de collecte d'informations selon l'une quelconque des revendications 1 à 12, **caractérisé en ce que** le protocole utilisé pour la connexion sécurisée entre le terminal client (10) et le terminal serveur (18) est choisi parmi l'un des protocoles standards de l'ensemble constitué du protocole SSL, du protocole SSH, du protocole TLS et du protocole WTLS.

14. Page de présentation (24) comportant un lien vers une autre page de demande d'établissement de connexion sécurisée avec un terminal serveur, la connexion sécurisée avec le terminal serveur nécessitant l'utilisation d'au moins un certificat électronique (S), **caractérisée en ce qu'**elle comporte une marque spécifique (24) détectable par un terminal de collecte d'informations (10, 12) pour le déclenchement d'une recherche d'informations nécessaires pour l'utilisation dudit certificat par un terminal client (10) et/ou le terminal serveur (18).
